# EUROPÄISCHE PATENTANMELDUNG

(11) **EP 4 458 594 A1**
(43) Veröffentlichungstag der Anmeldung: **06.11.2024**
(21) Anmeldenummer: 23171192.0
(22) Anmeldetag: 02.05.2023
(51) Int. Cl.: B60J 7/16

(54) **FREIZEITFAHRZEUG UND VERSTEIFUNGSSTRUKTUR FÜR EIN FREIZEITFAHRZEUG**

(71) Anmelder: Dethleffs GmbH & Co. KG, 88316 Isny im Allgäu (DE); Klaus Kunststofftechnik GmbH, 88319 Aitrach (DE)
(72) Erfinder: Plischke, Erik, 87547 Missen-Willhams (DE); Schuster, Thomas, 88138 Hergenweiler (DE); Mösle, Norbert, 87763 Lautrach (DE); Sauter, Roland, 88319 Aitrach (DE)
(74) Vertreter: Müller Schupfner & Partner Patent- und Rechtsanwaltspartnerschaft mbB (Muc)

(57) **Zusammenfassung**

Ein Freizeitfahrzeug (1) weist eine Versteifungsstruktur (2) auf. Das Freizeitfahrzeug (1) ist insbesondere als Wohnmobil oder Wohnwagen ausgebildet. Die Versteifungsstruktur (2) weist zumindest ein Profilstück (3) auf, das im montierten Zustand an einem Dach (4) des Freizeitfahrzeugs (1) angeordnet ist. Hierbei ist an dem Profilstück (3) eine Dachelementanbindung (5) ausgestaltet, über die im montierten Zustand ein Dachelement (15) des Freizeitfahrzeugs (1) an dem Profilstück (3) befestigt ist. Außerdem sind an dem Profilstück (3) mehrere weitere Anbindungen (6-9) ausgestaltet, über die im montierten Zustand mehrere weitere Elemente (16-19) an dem Profilstück (3) befestigt sind.

## Beschreibung

Die Erfindung betrifft ein Freizeitfahrzeug, insbesondere ein Wohnmobil oder einen Wohnwagen, mit einer Versteifungsstruktur, die zumindest teilweise am Dach des Freizeitfahrzeugs angeordnet ist.

Aus der DE 10 2021 103 413 A1 ist ein Campingfahrzeug bekannt, welches durch eine Dachaustauschvorrichtung zum Austauschen eines Dachelements gekennzeichnet ist. Hierbei kann eine Doppelschiene mit einer oberen Schiene und einer unteren Schiene vorgesehen sein. Die Schienen sind übereinander angeordnet, wobei die untere Schiene mit einem Dach des Campingfahrzeugs fest verklebt ist. In die obere Schiene ist das Dachelement einschiebbar. Über ein Verriegelungselement kann das Dachelement in seiner Position arretiert werden.

Aus der DE 100 19 369 A1 ist eine Dachanordnung für Fahrzeuge, insbesondere für Wohnmobile, mit einem im Dachbereich des Fahrzeugs angeordneten, über einen verschließbaren Durchstieg zugänglichen Schlafraum, der zum Fahrgastraum hin durch eine Bettplatte abgegrenzt ist, bekannt. Um den Durchstieg auf einfache Weise verschließen zu können, so dass sich im Fahrgastraum eine optisch geschlossene Dachhimmelansicht ergibt und im Bereich des Schlafraumes auftretende Fahrgeräusche vom Fahrgastraum ferngehalten werden, ist unter der Bettplatte ein in einer Führung verschiebbar gelagertes plattenförmiges Verschlussteil angeordnet, das aus einer Offenstellung in eine den Durchstieg verschließenden Verschlussstellung und umgekehrt verschiebbar ist.

Aus der DE 20 2020 106 946 U1 ist eine Markise zur Anbringung an einem Fahrzeug bekannt. Hierbei ist an einer ersten Kante eine Befestigungseinrichtung zur Befestigung der Markise an dem Fahrzeug vorgesehen.

Bei einem Freizeitfahrzeug, wie einem Wohnmobil, besteht in der Regel die Anforderung, mehrere Elemente im Bereich eines Daches zu befestigen. Beispielsweise kann eine Befestigung für ein Dachzelt, für einen Dachgepäckträger und für weitere Elemente, wie beispielsweise eine Kinematik für ein Dachzelt, erforderlich sein. Wenn solche Elemente am Dach montiert werden, dann bedingt dies mechanische Spannungen, was eine entsprechend belastbare Struktur erfordert. Hierbei kann sich der Nachteil ergeben, dass bestimmte Elemente optional sind und von einem Kunden gegebenenfalls nicht bestellt werden. Die verbaue Struktur beziehungsweise die verbauten Befestigungsmöglichkeiten erhöhen dann dennoch die Kosten und das Gewicht des Freizeitfahrzeugs.

Aufgabe der Erfindung ist es, eine Versteifungsstruktur für ein Freizeitfahrzeug, insbesondere für ein Wohnmobil oder einen Wohnwagen, und ein Freizeitfahrzeug mit solch einer Versteifungsstruktur anzugeben, die eine verbesserte Ausgestaltung und Funktionsweise ermöglicht.

Die Aufgabe wird durch eine Versteifungsstruktur mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Lösung der Aufgabe wird durch eine Versteifungsstruktur für ein Freizeitfahrzeug, insbesondere für ein Wohnmobil oder einen Wohnwagen, mit zumindest einem Profilstück, das im montierten Zustand an einem Dach des Freizeitfahrzeugs angeordnet ist, gelöst, wobei an dem Profilstück eine Dachelementanbindung ausgestaltet ist, über die im montierten Zustand ein Dachelement des Freizeitfahrzeugs an dem Profilstück befestigt ist, und wobei an dem Profilstück mehrere weitere Anbindungen ausgestaltet sind, über die im montierten Zustand mehrere weitere Elemente an dem Profilstück befestigt sind.

Ferner wird die Aufgabe durch ein Freizeitfahrzeug, insbesondere ein Wohnmobil oder einen Wohnwagen, mit zumindest einer solchen Versteifungsstruktur gelöst.

Vorteilhaft ist es, dass das Profilstück so ausgestaltet ist, dass über die mehreren weiteren Anwendungen im montierten Zustand zumindest ein Kinematikelement, insbesondere eine hintere Kinematik und/oder ein vorderer Aufsteller und/oder ein Dachaufbauelement, insbesondere ein Dachgepäckträger, und/oder ein Dachzelt und/oder zumindest ein Dichtelement, insbesondere eine Hauptdichtung, an dem Profilstück befestigbar ist. Auf diese Weise kann das Profilstück als zentrale Anbindungsstruktur am Dach dienen, so dass eine Krafteinleitung von unterschiedlichen Funktionskomponenten möglich ist.

Ferner ist das Profilstück in vorteilhafter Weise zumindest im Wesentlichen aus Aluminium und/oder einer Aluminiumlegierung gebildet. Hierdurch wird eine hohe Belastbarkeit bei geringem Gewicht ermöglicht. Durch die als Anbindungsstruktur dienende Versteifungsstruktur kann somit eine vorteilhafte Entkopplung der Krafteinleitung von unterschiedlichen Funktionskomponenten über das Profilstück aus Aluminium erfolgen, wodurch auch eine Reduktion von möglichen Spannungsspitzen bei thermischer Belastung möglich ist.

In vorteilhafter Weise weist eine an dem Profilstück für das Dachelement ausgestaltete Anbindung einander gegenüberliegende Anbindungsflächen auf, zwischen denen im montierten Zustand das Dachelement befestigt ist, wobei zumindest eine der Anbindungsflächen der Anbindung für das Dachelement gerippt und/oder mit einem Sägezahnprofil versehen ist. Hierdurch kann eine zuverlässige Befestigung des Dachelements, das einen Dachhimmel umfassen kann, an dem Profilstück ermöglicht werden.

Vorteilhaft ist es auch, dass an dem Profilstück eine Anbindung für zumindest ein Dachaufbauelement, insbesondere einen Dachgepäckträger oder eine Dachschale, ausgestaltet ist, die eine gerippte, insbesondere mit einem Sägezahnprofil versehene Anbindungsfläche aufweist. Die Anbindungsfläche ist hierbei im montierten Zustand vorzugsweise zumindest näherungsweise horizontal orientiert. Hierdurch kann eine vorteilhafte Abstützung von Lasten erreicht werden. Die Versteifungsstruktur kann hierdurch auch mehrere Funktionen vereinen. Hierdurch können ansonsten erforderliche, zusätzliche Elemente, die zum Beispiel zum Befestigen eines Dachaufbauelements, wie eines Dachgepäckträgers, dienen, eingespart werden. Hierdurch vereinfacht sich auch der konstruktive Aufbau des Freizeitfahrzeugs und es ergeben sich größere Freiheiten für die Konstruktion.

Des Weiteren ist es vorteilhaft, dass an dem Profilstück eine Anbindung für zumindest ein Dichtelement, insbesondere eine Hauptdichtung, ausgestaltet ist, die einander gegenüberliegende Anbindungsflächen aufweist, zwischen denen das Dichtelement befestigt ist, wobei zumindest eine der Anbindungsflächen der Anbindung für das Dichtelement mit Rippen versehen ist, die insbesondere mit einem Dreiecksprofil ausgestaltet sind. Somit kann auch die Funktionskomponente für eine Abdichtung an der Versteifungsstruktur befestigt werden.

In vorteilhafter Weise ist an dem Profilstück eine Anbindung für ein Dachzelt ausgestaltet, die einen Aufnahmeraum aufweist, wobei das Profilstück so ausgestaltet ist, dass sich ein Querschnitt des Aufnahmeraums zu einer an der Anbindung vorgesehenen Öffnung des Aufnahmeraums hin zumindest abschnittsweise verjüngt. Auf diese Weise kann auch eine Befestigung für das Dachzelt an dem Profilstück realisiert werden.

Vorteilhaft ist es, dass an dem Profilstück eine Anbindung für zumindest ein Kinematikelement ausgestaltet ist, die einen Aufnahmeraum aufweist, wobei das Profilstück so ausgestaltet ist, dass der Aufnahmeraum einen zumindest näherungsweise T-Profil-förmigen Querschnitt aufweist. Hierbei ergibt sich durch das Profilstück auch der Vorteil, dass eine Befestigungsstelle in Bezug auf den jeweiligen Anwendungsfall gewählt werden kann, um beispielsweise eine Anpassung an unterschiedlich ausgestaltete Dachzelte zu ermöglichen. Ferner wird eine Wartung oder ein Austausch des Kinematikelements erleichtert.

Vorteilhaft ist es, dass zumindest ein vorzugsweise gebogen ausgestaltetes Eckprofilstück vorgesehen ist, das vorzugsweise aus einem Kunststoff oder als Gussstück ausgebildet ist, und dass das Profil des Eckprofilstücks zumindest näherungsweise gleich dem Profil des Profilstücks ist. Speziell können solche Eckprofilstücke im Fahrzeugheck und an der Fahrzeugfront vorgesehen sein und sich direkt an das Profilstück der Versteifungsstruktur anschließen. Insbesondere wird hierbei ein Übergang von einem Längsprofilstück auf ein Heckprofilstück beziehungsweise ein Frontprofilstück ermöglicht.

Somit ist es speziell in diesem Zusammenhang auch von Vorteil, dass das Profilstück als Längsprofilstück ausgestaltet ist, dass zumindest ein Heckprofilstück vorgesehen ist, das vorzugsweise aus Aluminium ausgebildet ist, und dass das Profil des Heckprofilstücks zumindest näherungsweise gleich im Profil des Profilstücks ist. In entsprechender Weise ist es vorteilhaft, dass zumindest ein Frontprofilstück vorgesehen ist, das vorzugsweise aus Aluminium ausgenbildet ist, und dass das Profil des Frontprofilstücks zumindest näherungsweise gleich dem Profil des Profilstücks ist. Hierdurch können weitere Elemente befestigt werden. Insbesondere kann an dem Heckprofilstück ein Gasdruckdämpfer befestigt sein.

Je nach Ausgestaltung können somit ein oder mehrere Vorteile realisiert werden. Insbesondere können alle notwendigen Anbindungen in einer Baugruppe der Versteifungsstruktur eingebracht werden. Anbindungen können weitgehend beliebig erweitert werden. Die Versteifungsstruktur kann einen Rahmen bilden, der sämtliche Kräfte aufnimmt, welche auf eine Dachschale wirken können und gibt diese Kräfte dann unmittelbar an geeignete Elemente des Freizeitfahrzeugs weiter. Im aufgestellten Zustand können Scherkräfte direkt von der Versteifungsstruktur aufgenommen und abgeleitet werden, ohne beispielsweise eine Dachschale zu belasten. Ferner können ein einfacher Aufbau und eine einfache Montage gewährleistet werden. Ferner kann gegebenenfalls eine Dachschale einfacher ausgeführt werden. Insbesondere ist es möglich, dass die Dachschale nicht aus einem faserverstärktem Kunststoff, insbesondere aus einem glasfaserverstärktem Kunststoff, ausgebildet werden muss. Im Unterschied zu einer solchen Dachschale kann dann eine Dachschale zum Einsatz kommen, die eine geringere Dichte aufweist, da nur eine geringere Eigensteifigkeit erreicht werden muss. Hierdurch wird eine Gewichtseinsparung im Bereich der Dachschale erzielt. Ferner kann auf das Einlaminieren aufwändiger Armierungen gegebenenfalls verzichtet werden. Auch das Einlaminieren von Zusatzteilen kann gegebenenfalls entfallen. Des Weiteren ist die Versteifungsstruktur sehr flexibel, da Erweiterungen von Funktionskomponenten aus der gegebenen Form heraus möglich sind.

Weitere Vorteile und Einzelheiten der Erfindung werden anhand der in den schematischen Figuren dargestellten Ausführungsbeispielen näher erläutert. Hierbei zeigen:
- Fig. 1: Ein Freizeitfahrzeug mit einer Versteifungsstruktur in einer auszugsweisen, schematischen Darstellung entsprechendem einem Ausführungsbeispiel, wobei eine Ansicht von unten auszugsweise dargestellt ist;
- Fig. 2: die in Fig. 1 dargestellte Versteifungsstruktur des Freizeitfahrzeugs in einer schematischen Schnittdarstellung mit einem Dachgepäckträger, wobei eine Schnittansicht von quer außen gezeigt ist und ein Frontprofilstück entsprechend einem Profilstück ausgestaltet ist;
- Fig. 3: ein Profilstück der Versteifungsstruktur des Ausführungsbeispiels in einer schematischen Schnittdarstellung und
- Fig. 4: das in Fig. 2 gezeigte Profilstück mit einer Hauptdichtung und einem befestigten Dachaufbauelement in einer schematischen, auszugsweisen Darstellung entsprechend einer weiteren möglichen Ausgestaltung.

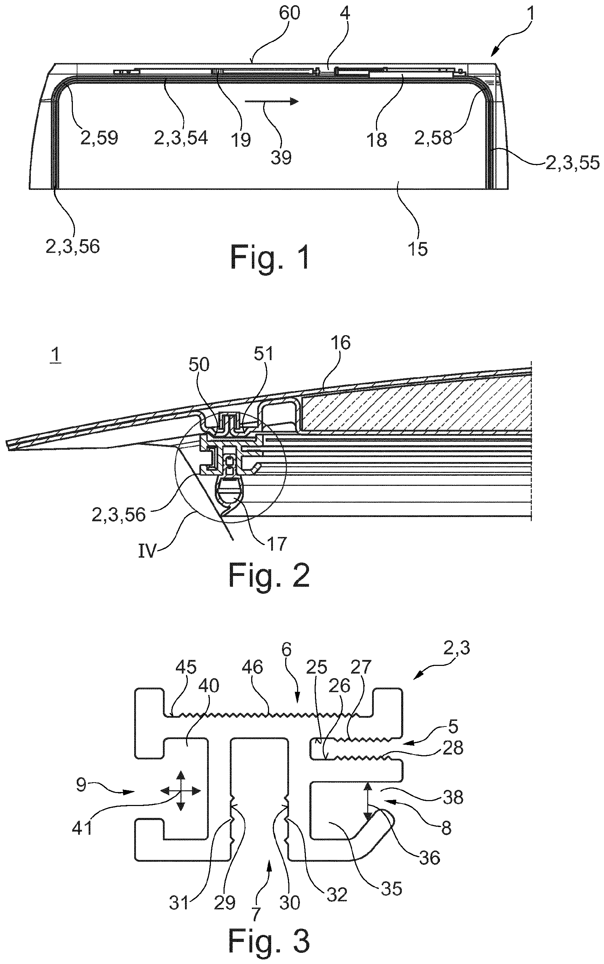

Fig. 1 bis 3 zeigen ein Freizeitfahrzeug 1 mit einer Versteifungsstruktur 2 entsprechend einem Ausführungsbeispiel. Hierbei zeigt Fig. 1 das Freizeitfahrzeug 1 in einer auszugsweisen Darstellung, wobei die Versteifungsstruktur 2 in einer Ansicht von unten gezeigt ist. Fig. 2 zeigt das Freizeitfahrzeug 1 und die Versteifungsstruktur 2 in einer Schnittansicht von quer außen. Fig. 3 zeigt ein Profilstück 3 der Versteifungsstruktur 2 in einer auszugsweisen, schematischen Schnittdarstellung, wobei insbesondere ein Profil des Profilstücks 3 veranschaulicht ist.

Das Freizeitfahrzeug 1 kann insbesondere als Wohnmobil oder Wohnwagen ausgestaltet sein. Die Versteifungsstruktur 2 eignet sich besonders für ein Wohnmobil oder einen Wohnwagen. Die Versteifungsstruktur 2 umfasst eine geeignete Anzahl an Profilstücken 3, beispielsweise die Profilstücke 54, 55, 56.

Das Profilstück 3 ist im montierten Zustand an einem Dach 4 des Freizeitfahrzeugs 1 angeordnet. An dem Profilstück 3 ist eine Dachelementanbindung 5 ausgestaltet, über die ein Dachelement 15 an dem Profilstück 3 befestigt ist. Ferner sind an dem Profilstück 3 mehrere weitere Anbindungen 6 bis 9 ausgestaltet, über die mehrere weitere Elemente 16 bis 19 an dem Profilstück 3 befestigt werden können. Hierbei kann in Bezug auf den jeweiligen Anwendungsfall eine geeignete Auswahl und Anzahl an weiteren Elementen 16 bis 19 an dem Profilstück 3 befestigt werden.

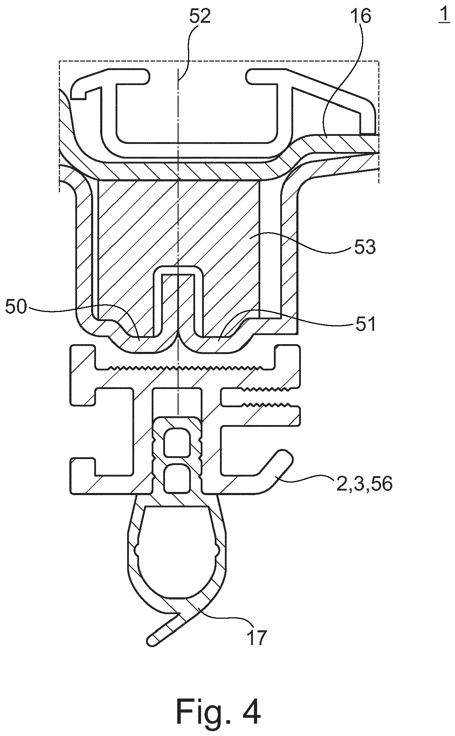

Bei einer möglichen Ausgestaltung kann an der weiteren Anbindung 6 ein Dachaufbauelement 16, insbesondere eine Dachschale 16 (Fig. 2) oder ein Dachgepäckträger 16 (Fig. 4), befestigt werden. An der Anbindung 7 kann ein Dichtelement 17 befestigt werden, das insbesondere als Hauptdichtung 17 ausgestaltet sein kann. An der Anbindung 8 kann ein Dachzelt (nicht dargestellt) befestigt werden. An der Anbindung 9 des Profilstücks 3 können eine geeignete Anzahl an Kinematikelementen 18, 19 befestigt werden. Beispielsweise kann ein Kinematikelement 18 als hintere Kinematik ausgeführt sein, während ein Kinematikelement 19 als vorderer Aufsteller 19 ausgestaltet ist.

Die an dem Profilstück 3 ausgestaltete Dachelementanbindung 5 weist einander gegenüberliegende Anbindungsflächen 25, 26 auf, die gerippt und mit einem Sägezahnprofil 27, 28 versehen sind. Hierdurch ist eine zuverlässige Befestigung des Dachelements 15 an der Dachelementanbindung 5 möglich.

Die Anbindung 7 des Profilstücks 3 dient für das Dichtelement 17. Hierbei sind für die Anbindung 7 Anbindungsflächen 29, 30 an dem Profilstück 3 ausgebildet. An der Anbindungsfläche 29 sind Rippen 31 ausgestaltet, die vorzugsweise ein Dreiecksprofil aufweisen. Entsprechend sind an der Anbindungsfläche 30 Rippen 32 ausgestaltet, die ebenfalls vorzugsweise ein Dreiecksprofil aufweisen. Zur Vereinfachung der Darstellung sind hierbei nur die Rippen 31, 32 gekennzeichnet.

An der Anbindung 8 des Profilstücks 3 kann ein Dachzelt befestigt werden. Hierbei weist die Anbindung 8 einen Aufnahmeraum 35 auf, der einen Querschnitt 36 beziehungsweise eine Höhe 36 hat. Der Querschnitt beziehungsweise die Höhe 36 verringert sich hierbei abschnittsweise zu einer Öffnung 38 hin. Dadurch ist der Aufnahmeraum 35 abschnittsweise sich zur Öffnung 38 hin verjüngend ausgestaltet. Diese Ausgestaltung ermöglicht insbesondere eine einfache Montage und Demontage des Dachzelts, beispielsweise für Wartungszwecke.

An der Anbindung 9 des Profilstücks 3 können Kinematikelemente 18, 19 befestigt werden. Beispielsweise kann das Kinematikelement 18 als hintere Kinematik dienen. Das Kinematikelement 19 kann als vorderer Aufsteller dienen. Bezüglich einer Erstreckungsrichtung 39 des Profilstücks 3 kann hierbei ein geeigneter Ort zur Befestigung der Kinetmatikelemente 18, 19 gewählt werden.

An der Anbindung 8 ist ein Aufnahmeraum 40 vorgesehen, der einen T-Profil-förmigen Querschnitt 41 aufweist. Durch Schraubelemente oder dergleichen kann die Befestigung der Kinematikelemente 18, 19 an der Anbindung 9 mit dem Profilstück 3 erfolgen.

Die Anbindung 6 für den Dachelementaufbau 16, insbesondere die Dachschale 16 oder den Dachgepäckträger 16, weist eine gerippte Anbindungsfläche 45 auf, die vorzugsweise mit einem Sägezahnprofil 46 versehen ist. Durch das Sägezahnprofil 46 kann insbesondere ein Verrutschen des darauf abgestützten Elements vermieden werden.

Insbesondere können Stützleisten 50, 51 der Dachschale oder des Dachgepäckträgers 16 auf der Anbindungsfläche 45 abgestützt sein, wie es in Fig. 2 dargestellt ist.

Fig. 4 zeigt eine abgewandelte Ausgestaltung des in Fig. 2 mit IV bezeichneten Ausschnitts des Freizeitfahrzeugs 1 mit der Versteifungsstruktur 2 und dem Dachaufbauelement 16 in Form eines Dachgepäckträgers 16. Beispielsweise kann eine Schraubverbindung an geeigneten Stellen entlang der Schraubachse 52 realisiert sein. Um Stöße abzudämpfen und trotz der gegebenenfalls langen Schrauben eine erforderliche Stabilität zu gewährleisten, können ein oder mehrere Zwischenstücke 53 vorgesehen sein. Solch ein Zwischenstück 53 kann beispielsweise aus einem Elastomer gebildet sein oder auf einem Elastomer basieren und somit als Puffer dienen.

In diesem Ausführungsbeispiel ist ein Längsprofilstück 54 entsprechend dem Profilstück 3 ausgestaltet. Hierbei können noch weitere Profilstücke 55, 56 vorgesehen sein, die in diesem Ausführungsbeispiel als Heckprofilstück 55 und als Frontprofilstück 56 ausgestaltet sind, wie es in Fig. 1 veranschaulicht ist, und ebenfalls entsprechend dem Profilstück 3 ausgestaltet sind. Speziell ist das in Fig. 2 gezeigte Profilstück das Frontprofilstück 56. Das Heckprofilstück 55 und das Frontprofilstück 56 sind Bestandteile der Versteifungsstruktur 2.

Die Profilstücke 3, insbesondere das Längsprofilstück 54, das Heckprofilstück 55 und das Frontprofilstück 56 sind jeweils vorzugsweise aus Aluminium oder einer Aluminiumlegierung ausgebildet. Ferner weisen das Längsprofilstück 54, das Heckprofilstück 55 und das Frontprofilstück 56 vorzugsweise jeweils das gleiche Profil auf, das in Fig. 3 veranschaulicht ist. Somit wird eine hohe lokale Belastbarkeit des Längsstücks 54, des Heckprofilstücks 55 und des Frontprofilstücks 56 ermöglicht, so dass Beschädigungen aufgrund von Befestigungskräften und/oder Haltekräften vermieden sind. Ferner wird eine universelle Schnittstelle über die Dachelementanbindung 5 und die weiteren Anbindungen 6 bis 9 gewährleistet.

Das Längsprofilstück 54 ist einerseits über ein Eckprofilstück 58 mit dem Heckprofilstück 55 und andererseits über ein Eckprofilstück 59 mit dem Frontprofilstück 56 verbunden. Die Eckprofilstücke 58, 59 sind jeweils gebogen ausgestaltet. Ferner sind die Eckprofilstücke 58, 59 vorzugsweise aus einem Kunststoff oder als Gussstück ausgebildet.

In entsprechender Weise kann die Versteifungsstruktur 2 von der Fahrzeugseite 60 auf die andere Fahrzeugseite fortgesetzt werden. Die Versteifungsstruktur 2 kann dann zwei sich entsprechende Längsprofilstücke 54, das Heckprofilstück 55, das Frontprofilstück 56 sowie insgesamt vier Eckprofilstücke 58, 59 aufweisen. Hierdurch kann ein geschlossener Profilverlauf erzielt werden.

Die gebogene Ausgestaltung der Eckprofilstücke 58, 59 hat den Vorteil, dass an jeder Stelle eine Befestigungsmöglichkeit realisiert ist. Die Ausgestaltung des Längsprofilstücks 54 sowie des Heckprofilstücks 55 und des Frontprofilstücks 56 als jeweils ungebogenes Profil, das lediglich auf Länge geschnitten werden kann, hat den Vorteil, dass eine kostengünstige Herstellung ermöglicht ist. Die Eckprofilstücke 58, 59 sind separat und insbesondere aus Kunststoff oder als Gussstücke hergestellt und vorzugsweise identisch profiliert wie das Längsprofilstück 54 beziehungsweise das Heckprofilstück 55 und das Frontprofilstück 56. Die gesamte Versteifungsstruktur 2 kann schwimmend mit der Innenschale des Daches 4 verbunden werden, wobei vorzugsweise ein Verkleben erfolgt. An dem Profil der Versteifungsstruktur 2 können dann sämtliche Funktionskomponenten angebunden werden.

In Längsrichtung kann durch die Anbindungsfläche 45 des Profilstücks 3 hindurch zumindest ein Dachgepäckträger 16 schwimmend verschraubt werden, wie es anhand der Fig. 4 veranschaulicht ist.

Die Erfindung ist nicht auf die beschriebenen Ausführungsformen beschränkt.

## Patentansprüche

1. Versteifungsstruktur (2) für ein Freizeitfahrzeug (1), insbesondere für ein Wohnmobil oder einen Wohnwagen, mit zumindest einem Profilstück (3), das im montierten Zustand an einem Dach (4) des Freizeitfahrzeugs (1) angeordnet ist, wobei an dem Profilstück (3) eine Dachelementanbindung (5) ausgestaltet ist, über die im montierten Zustand ein Dachelement (15) des Freizeitfahrzeugs (1) an dem Profilstück (3) befestigt ist,
**dadurch gekennzeichnet,**
**dass** an dem Profilstück (3) mehrere weitere Anbindungen (6-9) ausgestaltet sind, über die im montierten Zustand mehrere weitere Elemente (16-19) an dem Profilstück (3) befestigt sind.

2. Versteifungsstruktur nach Anspruch 1,
**dadurch gekennzeichnet,**
**dass** das Profilstück (3) so ausgestaltet ist, dass über die mehreren weiteren Anbindungen (6-9) im montierten Zustand zumindest ein Kinematikelement (18, 19), insbesondere eine hintere Kinematik (18) und/oder ein vorderer Aufsteller (19) und/oder ein Dachaufbauelement (16), insbesondere eine Dachschale (16) oder ein Dachgepäckträger (16), und/oder ein Dachzelt und/oder zumindest ein Dichtelement (17), insbesondere eine Hauptdichtung (17), an dem Profilstück (3) befestigbar ist, und/oder dass das Profilstück (3) zumindest im Wesentlichen aus Aluminium und/oder einer Aluminiumlegierung gebildet ist

3. Versteifungsstruktur nach Anspruch 1 oder 2,
**dadurch gekennzeichnet,**
**dass** die an dem Profilstück (3) für das Dachelement (15) ausgestaltete Dachelementanbindung (5) einander gegenüberliegende Anbindungsflächen (25, 26) aufweist, zwischen denen im montierten Zustand das Dachelement (25, 26) befestigt ist, wobei zumindest eine der Anbindungsflächen (25, 26) der Anbindung für das Dachelement (15) gerippt und/oder mit einem Sägezahnprofil versehen ist.

4. Versteifungsstruktur nach einem der Ansprüche 1 bis 3,
**dadurch gekennzeichnet,**
**dass** an dem Profilstück (3) eine Anbindung (6) für zumindest ein Dachaufbauelement (16), insbesondere eine Dachschale (16) oder einen Dachgepäckträger (16), ausgestaltet ist, die eine gerippte, insbesondere mit einem Sägezahnprofil (46) versehene, Anbindungsfläche (45) aufweist.

5. Versteifungsstruktur nach einem der Ansprüche 1 bis 4,
**dadurch gekennzeichnet**
**dass** an dem Profilstück (3) eine Anbindung (7) für zumindest ein Dichtelement (17), insbesondere eine Hauptdichtung (17), ausgestaltet ist, die einander gegenüberliegende Anbindungsfläche (29, 30) aufweist, zwischen denen das Dichtelement (17) befestigt ist, wobei zumindest eine der Anbindungsflächen (29, 30) der Anbindung (7) für das Dichtelement (17) mit Rippen (31, 32) versehen ist, die insbesondere mit einem Dreiecksprofil ausgestaltet sind.

6. Versteifungsstruktur nach einem der Ansprüche 1 bis 5,
**dadurch gekennzeichnet,**
**dass** an dem Profilstück (3) eine Anbindung (8) für ein Dachzelt ausgestaltet ist, die einen Aufnahmeraum (35) aufweist, wobei das Profilstück (3) so ausgestaltet ist, dass sich ein Querschnitt (36) des Aufnahmeraums (35) zu einer an der Anbindung (8) vorgesehenen Öffnung (38) des Aufnahmeraums (35) hin zumindest abschnittsweise verjüngt.

7. Versteifungsstruktur nach einem der Ansprüche 1 bis 6,
**dadurch gekennzeichnet,**
**dass** an dem Profilstück (3) eine Anbindung (9) für zumindest ein Kinematikelement (18, 19) ausgestaltet ist, die einen Aufnahmeraum (40) aufweist, wobei das Profilstück (3) so ausgestaltet ist, dass der Aufnahmeraum (40) einen zumindest näherungsweise T-Profil-förmigen Querschnitt (41) aufweist.

8. Versteifungsstruktur nach einem der Ansprüche 1 bis 7,
**dadurch gekennzeichnet,**
**dass** zumindest ein vorzugsweise gebogen ausgestaltetes Eckprofilstück (58, 59) vorgesehen ist, das vorzugsweise aus einem Kunststoff oder als Gussstück ausgebildet ist, und dass das Profil des Eckprofilstücks (58, 59) zumindest näherungsweise gleich dem Profil des Profilstücks (3) ist.

9. Versteifungsstruktur nach einem der Ansprüche 1 bis 8,
**dadurch gekennzeichnet,**
**dass** das Profilstück (3) als Längsprofilstück (54) ausgestaltet ist, dass zumindest ein Heckprofilstück (55) vorgesehen ist, das vorzugsweise aus Aluminium ausgebildet ist, und dass das Profil des Heckprofilstücks (55) zumindest näherungsweise gleich dem Profil des Profilstücks (3) ist und/oder dass zumindest ein Frontprofilstück (56) vorgesehen ist, das vorzugsweise aus Aluminium ausgebildet ist, und dass das Profil des Frontprofilstücks (56) zumindest näherungsweise gleich dem Profil des Profilstücks (3) ist.

10. Freizeitfahrzeug (1), insbesondere Wohnmobil oder Wohnwagen mit zumindest einer Versteifungsstruktur (2) nach einem der Ansprüche 1 bis 9.
